# EUROPEAN PATENT SPECIFICATION

(11) **EP 3 735 359 B1**
(45) Date of publication and mention of the grant of the patent: **12.07.2023**
(21) Application number: 18839885.3
(22) Date of filing: 28.12.2018
(51) Int. Cl.: B60H 1/32

(54) **AIR CONDITIONER FOR MOTOR VEHICLES**
KLIMAANLAGE FÜR EIN KRAFTFAHRZEUG
CLIMATISEUR POUR VÉHICULES À MOTEUR

(30) Priority: 02.01.2018 IT 201800000051
(43) Date of publication of application: 11.11.2020
(73) Proprietor: Barin, Luca, 20814 Varedo (IT)
(72) Inventor: Barin, Luca, 20814 Varedo (IT)
(74) Representative: Modiano, Micaela Nadia
(86) International application number: PCT/IB2018/060677
(87) International publication number: WO 2019/135151

(56) References cited:
- EP-A1- 2 681 066
- DE-A1-102012 213 906
- JP-A- H05 155 236
- JP-B2- 5 967 413
- KR-B1- 101 669 802
- US-A- 5 163 302

## Description

The present invention relates to an air conditioner for motor vehicles, particularly, but not exclusively, useful and practical for cooling and heating the passenger compartments of cars, commercial vehicles and work vehicles.

Nowadays the air conditioning systems that make it possible to cool and/or heat the passenger compartment are considered an almost indispensable accessory for any vehicle provided with a passenger compartment.

Air conditioners are in fact installed on the vast majority of vehicles on the market, both those for private use, such as typically cars, and those for commercial, tourist or industrial use, such as for example vans, coaches, agricultural machinery and construction site vehicles.

The air conditioners installed in vehicles make it possible to maintain optimal temperature and humidity conditions in the passenger compartment, even if the outside temperatures are very high or very low, to the advantage of the comfort and health of the occupants.

Conventional air conditioners for vehicles are constituted by cooling systems that use a compression/expansion thermodynamic cooling cycle.

In more detail, these conventional systems comprise an electromechanical compressor that compresses a gas, the temperature of which increases owing to the reduction in its volume.

The compressed gas then goes to a condenser, constituted by a heat exchanger which is in thermal communication with the outside environment, where it loses heat, moving from the gaseous phase to the liquid phase.

Once cooled, the pressurized fluid goes to a second heat exchanger in which it is placed in thermal communication with the air of the environment to be cooled and in which it is made expand, by lowering its pressure, through a throttle valve inside which there is a nozzle that makes the liquid expand with the minimum possible entropy. In practice, the liquid, through the throttle valve, is vaporized, cooling the surrounding air.

Once it has passed through the second heat exchanger, the low-pressure fluid returns to the compressor to begin a new cycle.

According to the known art, the heating function is instead usually achieved using the heat generated by the engine of the vehicle, by conveying the air, which is heated by making it pass through an adapted radiator connected to the cooling circuit of the engine, into the passenger compartment.

Sometimes, in addition to the radiator, there is also an electric heating element which makes it possible to heat the air more rapidly in the initial phase of use of the vehicle, during which the temperature of the engine is still relatively low.

The air conditioning systems for vehicles in use today, while very useful and practical, exhibit the considerable limitation of being able to operate exclusively with the engine of the vehicle running.

In fact the electromechanical compressor needs to be powered, directly or indirectly, by the engine of the vehicle.

Furthermore, the heating of the air can also only happen by virtue of the heat generated by the engine during its operation.

Some conventional air conditioning systems for vehicles overcome this limitation by providing an additional independent engine for supplying power to the compressor and/or to electric heating elements for heating. This solution however has the considerable drawback of being very noisy, as well as being very heavily polluting owing to the emissions of the engine.

Furthermore, this solution is also economically disadvantageous because of the fuel consumption of the supplementary engine.

Another drawback of this solution is the costs of installation and maintenance of the supplementary engine.

Another drawback which is common to all conventional air conditioning systems for vehicles is the fact that the cooling gases used are particularly harmful to the environment.

Another drawback of conventional air conditioning systems for vehicles is the fact that the presence of moving electromechanical parts (such as for example the parts of the compressor) makes them particularly prone to malfunctions and not entirely reliable.

Other conventional air conditioning systems for vehicles like US 5163302A, KR 101669802B1 or JP 5967413B2 use absorption-type systems to provide cooling to the interior of the vehicle.

The aim of the present invention consists in providing an air conditioner for vehicles that solves the above technical problem, eliminates the drawbacks and overcomes the limitations of the known art, by making it possible to cool and heat the passenger compartment even when the engine is switched off.

Within this aim, an object of the present invention is to provide an air conditioning system for vehicles that has a lower environmental impact when compared to the known art.

Another object of the invention consists in providing an air conditioning system for vehicles that is quieter than the known art.

Another object of the invention consists in providing an air conditioning system for vehicles with low fuel consumption.

Another object of the invention consists in providing an air conditioning system for vehicles that is more reliable and less prone to malfunctions when compared to the known art.

Another object of the invention consists in providing an air conditioning system for vehicles that is easy to implement and economically competitive when compared to the known art.

This aim and these and other objects which will become better apparent hereinafter are achieved by an air conditioner according to claim 1.

Further characteristics and advantages of the invention will become better apparent from the description of embodiments of an air conditioner for motor vehicles, which are illustrated by way of non-limiting example with the aid of the accompanying drawings wherein:

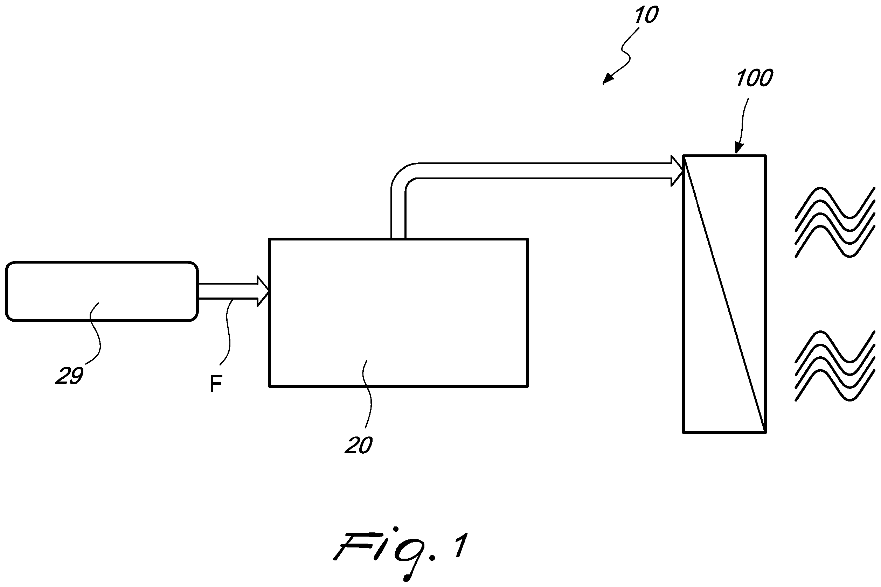

Figure 1 is a block diagram of an air conditioner for motor vehicles according to an example useful to understand the invention;
Figure 2 is a block diagram of an embodiment of the air conditioner for motor vehicles according to the invention;
Figure 3 is a schematic diagram of a possible embodiment of an air conditioner according to the invention, in the cooling configuration;
Figure 4 is a schematic diagram of the air conditioner in Figure 3, in the heating configuration;
Figure 5 is a schematic diagram of an embodiment of the hydraulic circuit for supplying an air conditioner according to the invention.

With reference to the figures, the air conditioner for motor vehicles, motor boats and the like, generally designated by the reference numeral 10, is designed for the air conditioning of the passenger compartment A of a motor vehicle, and more precisely of a vehicle provided with an internal combustion engine and with a tank 29 adapted to contain a fuel F for supplying such engine.

The term motor vehicle therefore means any vehicle, both for carrying passengers (such as for example automobiles, minibuses, coaches, camper vans etc.), and for transporting goods (such as for example trucks, forklifts with enclosed cabins etc.), and also works vehicles (such as for example agricultural vehicles or construction site vehicles with enclosed cabins). In practice, the present invention can be used on any vehicle as long as it is provided with a passenger compartment and with an engine that is supplied at least partially with the fuel F present in a tank 29 (therefore also including "hybrid" vehicles).

The fuel F should also be understood, in very general terms, to be any fuel, liquid or gas, that is adapted to supply an engine (such as for example gasoline, Diesel fuel, LPG, methane etc.) usually contained in the tank 29 of the vehicle.

According to the invention, the air conditioner 10 comprises an absorption refrigeration unit 100 which in turn comprises a refrigeration circuit 90 and a burner 20 which is arranged in thermal communication with such refrigeration circuit 90 and supplied with the fuel F present in the tank 29 of the vehicle (i.e. the same fuel F that supplies the engine of the vehicle).

It should be noted that, hereinafter, the term "in thermal communication" means functionally connected so as to be able to mutually exchange heat, i.e. that two elements described as being "in thermal communication" means they are capable of exchanging heat either directly (by contact, irradiation or convection) or indirectly (by being connected by a thermal conductor or a flow of a heat transfer fluid).

Returning to the air conditioner 10, according to the invention, the refrigeration circuit 90 comprises at least one evaporator 50 arranged in thermal communication with the passenger compartment A of the vehicle.

At least during operation, contained in the refrigeration circuit 90 is a fluid compound SR, which flows inside the circuit 90, partially in the liquid phase and partially in the gaseous phase, as normally occurs in conventional absorption refrigeration circuits and as will become clearer below.

The fluid compound SR is constituted by a binary compound SR which comprises a refrigerant fluid R and a solvent S.

Preferably, such binary compound SR is constituted by lithium bromide and water (H₂O-BrLi), where the water (H₂O) is the refrigerant fluid R and the lithium bromide (BrLi) is the solvent S, or by ammonia and water (NH₃-H₂O), where the ammonia (NH₃) is the refrigerant fluid R and the water (H₂O) is the solvent S.

Note that such binary compounds are less harmful to the environment than the refrigerant gases usually used in air conditioners that use a compressor.

In other possible embodiments, the fluid compound SR is constituted by any other chemical solution that is adapted to make an absorption thermodynamic cycle work.

The refrigeration circuit (90) is, according to the invention, configurable in a cooling configuration for the cooling of the passenger compartment (A) and also in a heating configuration for the heating of the passenger compartment (A). The configuration of the refrigeration circuit 90, in the cooling configuration and in the heating configuration, is carried out according to the known art, preferably according to what is usually carried out in conventional absorption heat pumps.

The switch from the cooling configuration to the heating configuration also occurs with conventional methods.

Preferably, there is also a user interface provided with a thermostat and with an electronic control unit that enables the user to control the operation of the refrigeration unit 100 and optionally to switch from the cooling configuration to the heating configuration.

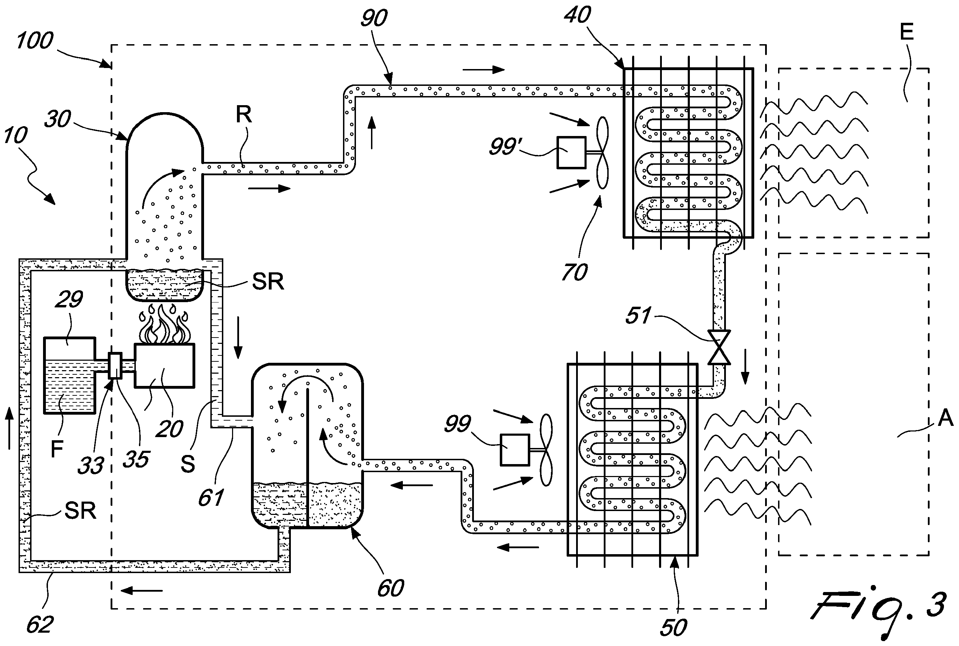

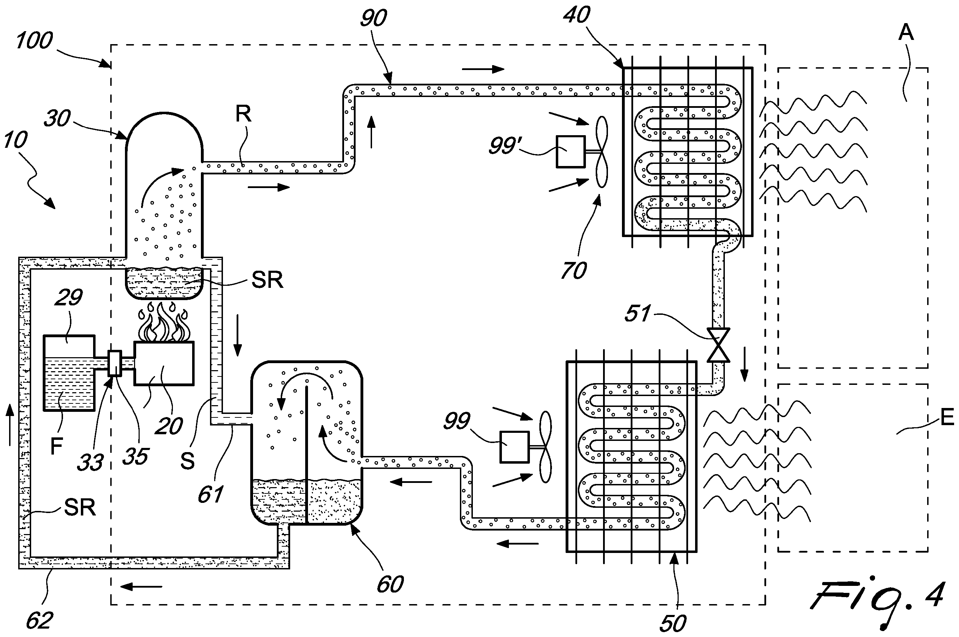

One of the possible embodiments of the refrigeration circuit 90 is shown purely schematically in Figures 3 and 4 where the circuit 90 is shown, respectively, in the cooling configuration and in the heating configuration.

With reference to Figures 3 and 4, the burner 20 is, as mentioned, in thermal communication with the refrigeration circuit 90 and, more precisely, it is configured to heat the fluid compound SR so as to cause the evaporation of at least part of it by making it circulate in the circuit 90 toward the evaporator 50.

In more detail, the burner 20 heats the binary compound SR, causing the evaporation of a part consisting of the refrigerant fluid R, thus separating it from the solvent S and creating a pressure that pushes it into the circuit 90 toward the evaporator 50.

Such heating of the binary compound SR with consequent separation of the refrigerant fluid R occurs inside a generation chamber 30, which is constituted for example by a desorber or a boiler (or by what in the sector is generally called a "generator"), arranged in thermal communication with the burner 20.

In the example shown schematically in Figure 3, the refrigeration circuit 90 comprises a generation chamber 30 in thermal communication with the burner 20 and in fluid communication with a condenser 40, the condenser 40 being in thermal communication with the outside environment E and in fluid communication with the evaporator 50, the evaporator 50 being in fluid communication with an absorption chamber 60, the absorption chamber 60 being in turn in fluid communication with the generation chamber 30.

It is useful to note that indicating two elements as being "in fluid communication" means, here, that those two elements are connected, preferably by way of a duct, so that a fluid can flow from one element to the other.

Returning in more detail to the elements that, in the example shown, make up the refrigeration circuit 90, the condenser 40 is constituted by a heat exchanger (for example a coil) in which the refrigerant fluid R transfers heat to the outside environment E (in the cooling configuration) or to the passenger compartment A (in the heating configuration), going from the gaseous phase to the liquid phase.

As it is known, the evaporator 50 is an element inside which the refrigerant fluid R is caused to evaporate at very low pressure, in the process cooling down and absorbing heat from the surrounding air, thus cooling it (and therefore absorbing heat from the passenger compartment A when the refrigeration circuit 90 is in the cooling configuration or from the outside environment E when it is in the heating configuration).

In the heating configuration the condenser 40 is arranged in thermal communication with the passenger compartment A and the evaporator 50 is arranged in thermal communication with the outside environment E, so that heat is released by the refrigerant fluid R to the passenger compartment A and heat is absorbed from the outside environment E.

By contrast, in the cooling configuration, the condenser 40 is arranged in thermal communication with the outside environment E and the evaporator 50 is arranged in thermal communication with the passenger compartment A, so that heat is transferred from the refrigerant fluid R to the outside environment E and heat is absorbed from the passenger compartment A.

The transition of the refrigerant fluid R to the vapor state at low pressure is caused preferably by at least one throttle valve 51 arranged upstream of the evaporator 50.

In order to facilitate the passage of the cooled air from the evaporator 50 (and, in the heating configuration, of the heated air from the condenser 40) to the passenger compartment, there can be a ventilation system which comprises one or more ventilation elements 99, 99' such as for example one or more fans.

Optionally the evaporator 50 and/or the condenser 40 is arranged in thermal communication with a heat transfer liquid, preferably water, which in turn is arranged in thermal communication with the passenger compartment A (for example circulating inside a circuit that comprises heat exchangers that are arranged in thermal communication with the passenger compartment A).

The absorption chamber 60 is connected to the generation chamber 30 by way of a delivery duct 61 for the passage of the solvent S (or in any case of part of the binary compound SR that is not evaporated and is low in refrigerant fluid R) from the generation chamber 30 to the absorption chamber 60 and a return duct 62 for the passage of the binary compound SR (recombined in the absorption chamber 60) from the absorption chamber 60 to the generation chamber 30.

The absorption chamber 60 is, in other words, a chamber in which the refrigerant fluid R originating from the vaporizer 50 and the solvent S originating from the generation chamber 30 merge, so as to be able to recombine to form the binary compound SR.

In practice, the burner 20 heats the binary compound SR in the generation chamber 30 and causes the evaporation of at least part of the refrigerant fluid R, separating it from the solvent S and propelling it, in the gaseous phase, toward the condenser 40, in which the refrigerant fluid R condenses, releasing heat, and then toward the vaporizer 50, in which it vaporizes, absorbing heat, and then toward the absorption chamber 60 in which it recombines with the solvent S, reconstituting the binary compound SR, which returns finally to the generation chamber 30.

As mentioned, one of the peculiarities of the invention consists in that the burner 20 is supplied by the fuel already present in the tank 29 of the vehicle for supplying the engine.

The air conditioner 10 is provided with a hydraulic supply system 33 for transferring the fuel F from the tank 29 of the vehicle to the burner 20.

Such hydraulic supply system 33 comprises a drawing duct 38 which has one end 39 arranged inside the tank 29 of the vehicle.

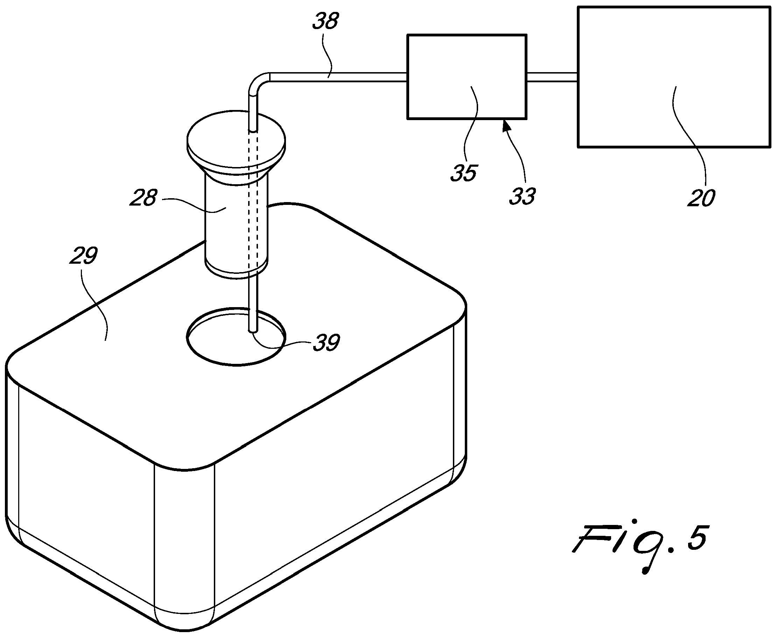

A possible embodiment of this hydraulic system 33 is shown in Figure 5 and requires the installation of a drawing duct 38 on the floating stopcock 28 which is usually present in the tank 29 of a vehicle; in other embodiments, not shown, the drawing duct 38 can be inserted into the tank 29 with other means, according to the type of tank.

In another embodiment, not shown, the hydraulic supply circuit 33 comprises a supplementary tank arranged in fluid communication with the burner 20 and with the tank 29 of the vehicle; such supplementary tank, in practice, is connected directly with the tank 29, or with the refueling duct of the vehicle, so that when the tank 29 of the vehicle is refilled with fuel F, part of the fuel F flows into such supplementary tank.

The supplementary tank can, optionally, also comprise a refueling duct in order to be refueled independently.

Preferably, the hydraulic supply system 33 also comprises a dosage pump 35 for the creation of a flow of fuel F from the tank 29 of the vehicle to the burner 20 (or optionally from the supplementary tank to the burner 20). The dosage pump 35 is conveniently configured to regulate such flow as a function of the thermal power required of the burner 20.

In practice, the dosage pump 35 doses the rate of flow of the fuel F toward the burner 20, increasing it when the burner 20 has to dispense more thermal power and decreasing it when the burner 20 has to dispense less thermal power.

Note that, since the burner 20 operates independently of the engine of the car, burning the fuel F for its own use, and the air-conditioning unit 100 does not require further sources of energy, the air conditioner 10 can operate even with the engine of the vehicle switched off, even for long periods.

Furthermore, the burner 20 has a considerably lower emission of sound than the electricity generators that are sometimes employed in the known art.

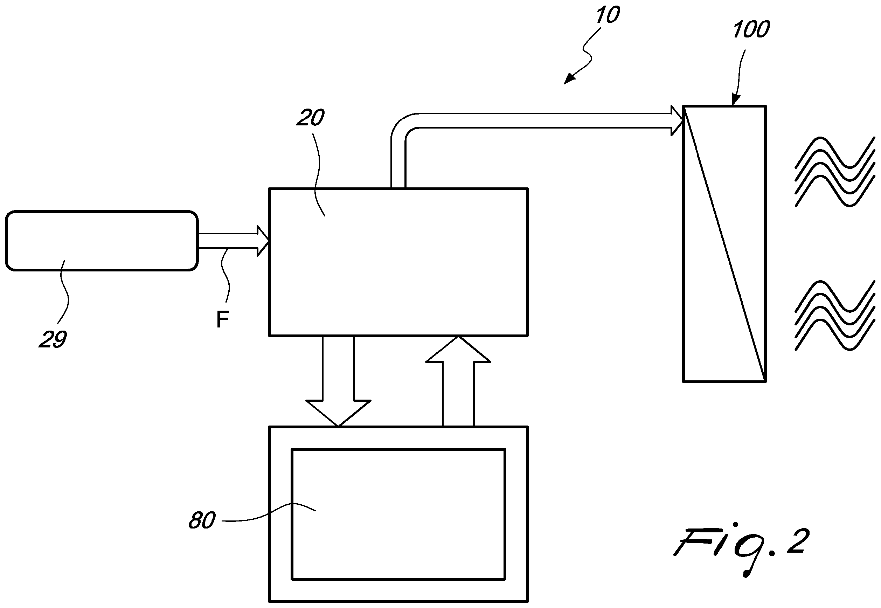

As shown in Figure 2, the air conditioner 10 also comprises a thermoelectric generator 80, arranged in thermal communication with the burner 20, so as to generate electric power from the heat generated by the burner 20, for powering elements that are complementary to the operation of the air conditioner 10.

In other words, the thermoelectric generator 80 powers all the components of the air conditioner that need an electricity supply, such as for example the electronic control unit, the fans, the user interface, any pumps present in the circuit etc. In this manner the air conditioner 10 is electrically autonomous and, differently from conventional air conditioners which have to draw energy for example from the battery of the vehicle, it can operate without drawing energy from external sources.

Finally it should be noted that, since in the air conditioner according to the invention there are no moving electromechanical parts, it is particularly reliable and not prone to malfunctions.

Operation of the air conditioner 10 is clear and evident from the foregoing description.

In practice it has been found that the air conditioner for motor vehicles, according to the present invention, achieves the intended aim and objects in that it makes it possible to cool, and optionally heat, the passenger compartment even when the engine is switched off.

Another advantage of the air conditioner, according to the invention, consists in that it has a lower environmental impact when compared to the known art.

Another advantage of the air conditioner, according to the invention, consists in that it is quieter with respect to the known art.

Another advantage of the air conditioner, according to the invention, consists in that has low fuel consumption.

Another advantage of the air conditioner, according to the invention, consists in that it is more reliable and less prone to malfunctions with respect to the known art.

Another advantage of the air conditioner, according to the invention, consists in that it is easy to implement and economically competitive when compared to the known art.

In practice the materials employed, provided they are compatible with the specific use, and the contingent dimensions and shapes, may be any according to requirements.

## Claims

1. An air conditioner (10) for the air conditioning of the passenger compartment (A) of a vehicle of the type provided with an internal combustion engine and with a tank (29) adapted to contain a fuel (F) for supplying said engine,
comprising an absorption refrigeration unit (100) which in turn comprises:
- a refrigeration circuit (90) adapted to contain a fluid compound (SR) and comprising at least one evaporator (50) arranged in thermal communication with the passenger compartment (A) of the vehicle and
a burner (20) supplied by said fuel (F) contained in the tank (29) of the vehicle, arranged in thermal communication with said refrigeration circuit (90) and configured to heat said fluid compound (SR) so as to cause the evaporation of at least part of it by making it circulate in the refrigeration circuit (90) toward said evaporator (50), said refrigeration circuit (90) comprises a generation chamber (30) in thermal communication with said burner (20) and in fluid communication with a condenser (40), said condenser (40) being in thermal communication with the outside environment (E) and in fluid communication with said evaporator (50), said evaporator (50) being in fluid communication with an absorption chamber (60), said absorption chamber (60) being in turn in fluid communication with said generation chamber (30);
said refrigeration circuit (90) being configurable in a cooling configuration for the cooling of the passenger compartment (A), wherein said fluid compound (SR) is a binary compound (SR) comprising a refrigerant fluid (R) and a solvent (S) and wherein the burner (20), by heating said binary compound (SR) in the generation chamber (30), causes the evaporation of at least part of the refrigerant fluid (R), separating it from the solvent (S) and propelling it in the gaseous phase toward the condenser (40), in which said refrigerating fluid (R) condenses, transferring heat to the outside environment (E), and then towards the vaporizer (50), in which it vaporizes, absorbing heat from the passenger compartment (A), and then toward the absorption chamber (60), in which it recombines with the solvent (S), reconstituting said binary compound (SR); said absorption chamber (60) being connected to the generation chamber (30) by way of a delivery duct (61) for the passage of the solvent (S) from the generation chamber (30) to the absorption chamber (60) and a return duct (62) for the passage of the binary compound (SR) from the absorption chamber (60) to the generation chamber (30), **characterized in that** said refrigeration circuit (90) is also configurable in a heating configuration for the heating of the passenger compartment (A), in which said condenser (40) is arranged in thermal communication with the passenger compartment (A) and said evaporator (50) is arranged in thermal communication with the outside environment (E), so that heat is released by said refrigerant fluid (R) to the passenger compartment (A) and heat is absorbed from the outside environment (E), and **in that** it comprises a thermoelectric generator (80) arranged in thermal communication with said burner (20), so as to generate electric power from the heat generated by said burner (20), for powering elements that are complementary to the operation of said air conditioner (10), a hydraulic supply system (33) for the transfer of the fuel (F) from the tank of the vehicle (29) to the burner (20) being provided; said hydraulic supply system (33) comprising a drawing duct (38) which has an end (39) arranged inside said tank (29) and/or a supplementary tank arranged in fluid communication with said burner (20) and with said tank (29) of the vehicle.

2. The air conditioner (10) according to claim 1, **characterized in that** said binary compound (SR) is one of the following:
- lithium bromide and water (H₂O-BrLi), wherein the water (H₂O) is the refrigerant fluid (R) and the lithium bromide (BrLi) is the solvent (S),
- ammonia and water (NH₃-H₂O), in which the ammonia (NH₃) is the refrigerant fluid (R) and the water (H₂O) is the solvent (S).

3. The air conditioner (10) according to claim 1, **characterized in that** said hydraulic supply system (33) also comprises a dosage pump (35) for the creation of a flow of fuel (F) from said tank (29) of the vehicle to said burner (20); said dosage pump (35) being configured to regulate said flow as a function of the thermal power required of the burner (20).

4. A motor vehicle, **characterized in that** it comprises an air conditioner (10) according to one or more of claims 1 to 3.

## Patentansprüche

1. Eine Klimaanlage (10) zur Klimatisierung des Fahrgastraums (A) eines Fahrzeugs von der Art, die mit einem Verbrennungsmotor und mit einem Tank (29) ausgestattet ist, der ausgebildet ist, um einen Kraftstoff (F) zur Versorgung des Motors aufzunehmen,
eine Absorptionskälteeinheit (100) umfassend, die wiederum Folgendes umfasst:
- einen Kühlkreislauf (90), ausgebildet, um eine Fluidmasse (SR) aufzunehmen, und mindestens einen Verdampfer (50) umfassend, der in thermischem Austausch mit dem Fahrgastraum (A) des Fahrzeugs angeordnet ist, und
einen Brenner (20), versorgt von dem Kraftstoff (F) im Tank (29) des Fahrzeugs, angeordnet in thermischem Austausch mit dem Kühlkreislauf (90) und ausgebildet, um die Fluidmasse (SR) zu erhitzen, um die Verdampfung mindestens eines Teils derselben durch Zirkulierenlassen derselben im Kühlkreislauf (90) zum Verdampfer (50) hin zu veranlassen, wobei der Kühlkreislauf (90) eine Erzeugungskammer (30) in thermischem Austausch mit dem Brenner (20) und in Fluidaustausch mit einem Kondensator (40) umfasst, wobei der Kondensator (40) in thermischem Austausch mit der äußeren Umgebung (E) und in Fluidaustausch mit dem Verdampfer (50) ist, wobei der Verdampfer (50) in Fluidaustausch mit einer Absorberkammer (60) ist, wobei die Absorberkammer (60) wiederum in Fluidaustausch mit der Erzeugungskammer (30) steht;
wobei der Kühlkreislauf (90) in einer Kühlkonfiguration zum Kühlen des Fahrgastraums (A) konfigurierbar ist, wobei die Fluidmasse (SR) eine binäre Verbindung (SR) ist, die ein Kühlfluid (R) und ein Lösungsmittel (S) umfasst, und wobei der Brenner (20) durch Erhitzen der binären Verbindung (SR) in der Erzeugungskammer (30) die Verdampfung mindestens eines Teils des Kühlfluids (R) veranlasst, wodurch es vom Lösungsmittel (S) getrennt und in der gasförmigen Phase zum Kondensator (40) getrieben wird, in welchem das Kühlfluid (R) kondensiert, wodurch Wärme an die äußere Umgebung (E) übertragen wird, und dann zum Verdampfer (50), in welchem es verdampft, wobei Wärme vom Fahrgastraum (A) absorbiert wird, und dann zur Absorberkammer (60), in welcher es mit dem Lösungsmittel (S) rekombiniert wird, wodurch die binäre Verbindung (SR) wiederhergestellt wird; wobei die Absorberkammer (60) mit der Erzeugungskammer (30) über eine Abgabeleitung (61) für den Übergang des Lösungsmittels (S) von der Erzeugungskammer (30) zur Absorberkammer (60) und eine Rücklaufleitung (62) für den Übergang der binären Verbindung (SR) von der Absorberkammer (60) zur Erzeugungskammer (30) verbunden ist; **dadurch gekennzeichnet, dass** der Kühlkreislauf (90) auch in einer Heizkonfiguration zum Heizen des Fahrgastraums (A) konfigurierbar ist, in welcher der Kondensator (40) in thermischem Austausch mit dem Fahrgastraum (A) angeordnet ist und der Verdampfer (50) in thermischem Austausch mit der äußeren Umgebung (E) angeordnet ist, so dass Wärme von dem Kühlfluid (R) an den Fahrgastraum (A) abgegeben wird und Wärme von der äußeren Umgebung (E) absorbiert wird; und dadurch, dass sie einen thermoelektrischen Generator (80) umfasst, der in thermischem Austausch mit dem Brenner (20) angeordnet ist, um aus der von dem Brenner (20) erzeugten Wärme Strom zu erzeugen, um Elemente mit Strom zu versorgen, die komplementär zu dem Betrieb der Klimaanlage (10) sind; wobei ein Hydraulikversorgungssystem (33) für den Transfer des Kraftstoffs (F) vom Tank des Fahrzeugs (29) zum Brenner (20) bereitgestellt ist; wobei das Hydraulikversorgungssystem (33) eine Saugleitung (38) hat, die ein Ende (39) hat, das in dem Tank (29) und/oder einem zusätzlichen Tank positioniert ist, welcher in Fluidaustausch mit dem Brenner (20) und mit dem Tank (29) des Fahrzeugs steht.

2. Die Klimaanlage (10) gemäß Anspruch 1, **dadurch gekennzeichnet, dass** die binäre Verbindung (SR) eines von Folgendem ist:
- Lithiumbromid und Wasser (H₂O-BrLi), wobei das Wasser (H₂O) das Kühlfluid (R) ist und das Lithiumbromid (BrLi) das Lösungsmittel (S) ist,
- Ammoniak und Wasser (NH₃-H₂O), wobei das Ammoniak (NH₃) das Kühlfluid (R) ist und das Wasser (H₂O) das Lösungsmittel (S) ist.

3. Die Klimaanlage (10) gemäß Anspruch 1, **dadurch gekennzeichnet, dass** das Hydraulikversorgungssystem (33) auch eine Dosierpumpe (35) zur Erzeugung eines Flusses von Kraftstoff (F) von dem Tank (29) des Fahrzeugs zu dem Brenner (20) umfasst; wobei die Dosierpumpe (35) ausgebildet ist, um den Fluss in Abhängigkeit von der vom Brenner (20) geforderten Wärmeleistung zu regulieren.

4. Ein Kraftfahrzeug, **dadurch gekennzeichnet, dass** es eine Klimaanlage (10) gemäß einem oder mehreren der Ansprüche 1 bis 3 umfasst.

## Revendications

1. Climatiseur (10) destiné à la climatisation de l'habitacle (A) d'un véhicule équipé d'un moteur à combustion interne et d'un réservoir (29) adapté pour contenir un carburant (F) destiné à alimenter ledit moteur,
comprenant une unité de réfrigération par absorption (100) qui comprend à son tour :
- un circuit de réfrigération (90) adapté pour contenir un composé liquide (SR) et comprenant au moins un évaporateur (50) prévu en communication thermique avec l'habitacle (A) du véhicule, et
un brûleur (20) alimenté par ledit carburant (F) contenu dans le réservoir (29) du véhicule, prévu en communication thermique avec ledit circuit de réfrigération (90) et configuré pour chauffer ledit composé liquide (SR) de façon à provoquer l'évaporation d'au moins une partie de celui-ci en le faisant circuler dans le circuit de réfrigération (90) vers ledit évaporateur (50), ledit circuit de réfrigération (90) comprenant une chambre de génération (30) en communication thermique avec ledit brûleur (20) et en communication de fluide avec un condenseur (40), ledit condenseur (40) étant en communication thermique avec l'environnement extérieur (E) et en communication de fluide avec ledit évaporateur (50), ledit évaporateur (50) étant en communication de fluide avec une chambre d'absorption (60), ladite chambre d'absorption (60) étant à son tour en communication de fluide avec ladite chambre de génération (30) ;
ledit circuit de réfrigération (90) étant configurable dans une configuration de refroidissement pour le refroidissement de l'habitacle (A), dans lequel ledit composé liquide (SR) est un composé binaire (SR) comprenant un liquide réfrigérant (R) et un solvant (S) et dans lequel le brûleur (20), en chauffant ledit composé binaire (SR) dans la chambre de génération (30), provoque l'évaporation d'au moins une partie du liquide réfrigérant (R), en le séparant du solvant (S) et en le propulsant en phase gazeuse vers le condenseur (40), dans lequel ledit liquide réfrigérant (R) se condense, en transférant la chaleur vers l'environnement extérieur (E), puis vers le vaporiseur (50), dans lequel il se vaporise, en absorbant la chaleur de l'habitacle (A), puis vers la chambre d'absorption (60), dans laquelle il se recombine avec le solvant (S), en reconstituant ledit composé binaire (SR) ; ladite chambre d'absorption (60) étant reliée à la chambre de génération (30) par le biais d'une conduite d'alimentation (61) destinée au passage du solvant (S) de la chambre de génération (30) vers la chambre d'absorption (60) puis d'une conduit de retour (62) destinée au passage du composé binaire (SR) de la chambre d'absorption (60) vers la chambre de génération (30), **caractérisé en ce que** ledit circuit de réfrigération (90) est également configurable dans une configuration de chauffage destinée au chauffage de l'habitacle (A), dans laquelle ledit condenseur (40) est placé en communication thermique avec l'habitacle (A) et ledit évaporateur (50) est placé en communication thermique avec l'environnement extérieur (E), de sorte que de la chaleur soit émise par ledit liquide réfrigérant (R) vers l'habitacle (A) et que la chaleur soit absorbée depuis l'environnement extérieur (E), et **en ce qu'**il comprend un générateur thermoélectrique (80) prévu en communication thermique avec ledit brûleur (20), de façon à générer de l'électricité à partir de la chaleur générée par ledit brûleur (20), afin d'alimenter des éléments qui sont complémentaires au fonctionnement dudit climatiseur (10), un système d'alimentation hydraulique (33) destiné au transfert du carburant (F) du réservoir du véhicule (29) jusqu'au brûleur (20) prévu ; ledit système d'alimentation hydraulique (33) comprenant une conduite d'aspiration (38) qui possède une extrémité (39) prévue à l'intérieur dudit réservoir (29) et/ou un réservoir supplémentaire prévu en communication de fluide avec ledit brûleur (20) et ledit réservoir (29) du véhicule.

2. Climatiseur (10) selon la revendication 1, **caractérisé en ce que** ledit composé binaire (SR) est l'un de ce qui suit :
- du bromure de lithium et de l'eau (H₂O-BrLi), dans lequel l'eau (H₂O) est le liquide réfrigérant (R) et le bromure de lithium (BrL) est le solvant (S),
- de l'ammoniac et de l'eau (NH₃-H₂O), dans lequel l'ammoniac (NH₃) est le liquide réfrigérant (R) et l'eau (H₂O) est le solvant (S).

3. Climatiseur (10) selon la revendication 1, **caractérisé en ce que** ledit système d'alimentation hydraulique (33) comprend en outre une pompe de dosage (35) destinée à la création d'un flux de carburant (F) entre ledit réservoir (29) du véhicule et ledit brûleur (20) ; ladite pompe de dosage (35) étant configurée pour réguler ledit flux en fonction de la puissance thermique requise du brûleur (20).

4. Véhicule à moteur, **caractérisé en ce qu'**il comprend un climatiseur (10) selon une ou plusieurs des revendications 1 à 3.
